# EUROPEAN PATENT SPECIFICATION

(11) **EP 3 438 185 B1**
(45) Date of publication and mention of the grant of the patent: **18.11.2026**
(21) Application number: 18194069.3
(22) Date of filing: 21.12.2012
(51) Int. Cl.: C08L 23/14, C08L 23/20

(54) **HIGH FREQUENCY WELDABLE POLYOLEFIN COMPOSITIONS INCLUDING POLAR POLYMERS**
HOCHFREQUENZSCHWEISSBARE POLYOLEFINZUSAMMENSETZUNGEN MIT POLAREN POLYMEREN
COMPOSITIONS DE POLYOLÉFINE SOUDABLES HAUTE FRÉQUENCE COMPRENANT DES POLYMÈRES POLAIRES

(30) Priority: 21.12.2011 US 201161578277 P
(43) Date of publication of application: 06.02.2019
(62) Document number(s) of the earlier application(s) in accordance with Art. 76 EPC: 12818857.0 / 2 794 754
(73) Proprietor: Dow Global Technologies LLC, Midland, MI 48674 (US)
(72) Inventor: WEAVER, Laura Bauerle, Lake Jackson, TX Texas 77566 (US); HU, Yushan, Pearland, TX Texas 77584 (US); REGO, Jose M., Houston, TX Texas 77041 (US); LI, Guang Ming, Sugar Land, TX Texas 77479 (US); DANIEL, Sherrika D., Manvel, TX Texas 77578 (US); WALTON, Kim L., Lake Jackson, TX Texas 77566 (US)
(74) Representative: Boult Wade Tennant LLP

(56) References cited:
- EP-A1- 1 295 909
- WO-A2-2008/057878
- S. YAMAKAWA: "Hot-melt adhesive bonding of polyethylene with ethylene copolymers", POLYMER ENGINEERING AND SCIENCE., vol. 16, no. 6, 1 June 1976 (1976-06-01), US, pages 411 - 418, XP055580973, ISSN: 0032-3888, DOI: 10.1002/pen.760160606
- RAZAVI-NOURI ET AL: "Studies of comonomer distributions and molecular segregations in metallocene-prepared polyethylenes by DSC", POLYMER TESTING, ELSEVIER, AMSTERDAM, NL, vol. 25, no. 8, 1 December 2006 (2006-12-01), pages 1052 - 1058, XP027950678, ISSN: 0142-9418, [retrieved on 20061201]
- ALTEC: "V.L.D.P.E. - altecweb.com Glossary", 1 January 2022 (2022-01-01), XP93001374, Retrieved from the Internet <URL:https://www.altecweb.com/glossary.asp?entry=V.L.D.P.E.> [retrieved on 20221123]

## Description

### BACKGROUND OF THE INVENTION

### 1. Field of the Invention

The invention relates to the field of welding of polyolefin-based articles. More particularly, it relates to a method of welding certain polyolefin-based articles by dielectric heating, wherein the articles exhibit properties improvements.

### 2. Background of the Art

Dielectric heating provides a method of contactless, direct, volumetric heating of dielectric materials, which are defined as materials that are capable of absorbing electromagnetic energy and which are also very poor electrical conductors. This is achieved by the application of an alternating electric field generated at the given frequency range to the dielectric material. The dielectric loss factor, also known as the dielectric loss index, is a measure of the energy loss in a material and is indicative of how well that material can be heated in the high frequency, alternating electric field. If a material has a relatively high dielectric loss index, it may be well-suited for subjection to dielectric heating. In such a case dielectric heating offers a clean and controllable process that eliminates problems associated with the application of direct heat to a variety of materials. Thus, the process has been found to be economically attractive for use in certain commercial and industrial manufacturing processes. Dielectric heating is typically carried out using high frequency (HF) electromagnetic field (3 kHz to 300 GHz), which include radio frequency (RF) (3 kHz to 300 MHz) and microwave frequency (300 MHz to 300 GHz).

One application of dielectric heating is referred to as radio frequency (RF) welding or sealing, also referred to as high frequency (HF) welding or sealing. In this application at least one surface of a sheet or film of a suitably lossy material (i.e., having a relatively high dielectric loss index) is welded or sealed, either to another surface of the same sheet or face of another sheet or film, in order to fabricate an article of some type. Suitably lossy materials may include those containing functional groups having dipole moments that are responsive to the high frequency electromagnetic field. Examples of this may include certain specific polymers, such as polyvinyl chloride (PVC). Unfortunately, however, PVC may present environmental or toxicological challenges that manufacturers would like to avoid.

Researchers have tried to find means to make a normally non-lossy material suitable for dielectric heating by incorporating some proportion of a second, RF responsive material therein. In International Publication No. WO/2002/088229 the dielectric heating of thermoplastic compositions included incorporating a molecular sieve with at least one interpolymer described as comprising (i) polymer units derived from at least one aliphatic olefin monomer having from 2 to 20 carbon atoms; and (ii) polymer units derived from (a) at least one vinyl or vinylidene aromatic monomer, or (b) from at least one sterically hindered aliphatic or cycloaliphatic vinyl or vinylidene monomer, or (c) from a combination of at least one vinyl or vinylidene aromatic monomer and at least one sterically hindered aliphatic or cycloaliphatic vinyl or vinylidene monomer, and optionally, (d) polymer units derived from at least one ethyleneically unsaturated polymerizable monomer other than that derived from (a), (b) or (c). An example thereof would be an ethylene-styrene interpolymer.

Another disclosure addressing use of zeolites is Japanese Patent Application No. 10-219048, which describes HF weldable polypropylene compositions consisting of fine metal oxide particles, ion-substituted zeolite, and polypropylene. The ion-substituted zeolite, in which a portion or all of the exchangeable ions are replaced with ammonium ions and silver ions, is used as a nucleating agent and chlorine scavenger. European Patent Application No. 193 902 proposes to use zinc oxide, bentonite clay, or crystalline and amorphous alkali or alkaline earth metal aluminosilicates as HF sensitizers for high molecular weight, high density polyethylene or ultrahigh molecular weight polyethylene. It is taught therein that the radio frequency sensitizers have to be essentially dried prior to use. European Patent No. 149 782 discloses compositions comprising silane-grafted polyolefins and a crystalline zeolite. The compositions are shapeable into articles which can be cross-lined after shaping y exposure to humidity and/or microwaves.

In fact, some of the most widely used thermoplastic polymers, such as polyethylene, polystyrene and polypropylene, are known to be insufficiently lossy to permit efficient dielectric heating. Other researchers have tried to make HF weldable compositions by combining such non-lossy olefins with polar acrylate esters or vinyl acetates. See UK Patent Application No. 2 177 974. Still another involves using blends of propylene-ethylene copolymers and an ethylene-alkyl acrylate copolymer. See International Patent Application WO 94/12569. International Application No. WO 00/69629 discloses HF weldable films made from a blend of a non-polar olefin polymer and a polar copolymer with carbon monoxide (CO). U.S. Patent No. 3, 336173 discloses HF weldable polyethylene and polypropylene compositions obtained by the incorporation of long chain synthetic polyamide resin. U.S. Patent No. 6,136,923 discloses thermoplastic compositions of alpha-olefin monomers with one or more vinylidene aromatic monomers and/or one or more hindered aliphatic or cycloaliphatic vinylidene monomers blended with polyvinyl chloride.

EP 1 295 909 A1 relates to high frequency sealable and cold flexible polymer compositions and their use. WO2008/057878 A2 relates to articles comprising non-polar polyolefin and polyurethane.

In view of the above, there is still a need for polymer compositions which are suitable as substitute materials for chlorine containing polymers, particularly polyvinyl chloride (PVC) or chlorinated polyvinyl chloride (CPVC), which can be dielectrically heated. In particular, there is a need for such polymer compositions which can be formed into HF weldable structures, including, for example, a film, a sheet, a foam, a profile, a molding, or a fabricated article.

There is furthermore also a need for a material that has desirable appearance and also acceptable or desirable mechanical properties. Such properties are frequently defined as requiring a weld failure that is cohesive in nature, and a weld strength for a part having a 10 mil (0.254 millimeter) thickness) that is greater than at least 5 pounds per inch (lb/in, 0.88 Newtons per millimeter, N/mm), preferably greater than 7 lb/in (1.23 N/mm), under welding conditions including less than or equal to 6 seconds welding time and certain optimized radio frequency welding conditions including power ranging from 80 to 100 percent (%).

### SUMMARY OF THE INVENTION

In one aspect the present invention there is provided a dielectrically weldable polyolefin formulation as defined in claim 1 of the claims appended hereto.

In another aspect the present invention there is provided an improvement in a method of forming a polyolefin-based article as defined in claim 2 of the claims appended hereto.

In a third aspect the present invention provides a high frequency welded polyolefin article as defined in claim 3 of the claims appended hereto.

### DETAILED DESCRIPTION OF THE EMBODIMENTS

The invention provides a polymeric composition that offers in many embodiments improved high frequency weldability, convenient optimization of welding conditions, convenient customization of formulation with respect to properties such as modulus and hand-feel, and desirable cosmetic features such as reduction or elimination of stress whitening. These are accomplished via the invention's combination of one or more specified base polymers and one or more specified secondary polar polymers, optionally in combination with additional polymers and/or additives to form a polyolefin formulation which is then used to form a polyolefin substrate, including but not limited to a sheet, a film, or a molded substrate, including both an injection or a compression molded substrates, to serve as or to use to produce polyolefin articles.

The first feature of the invention is use of a specific selected base polymer, designated herein as Component A. The present invention employs a polyolefin having a relatively low or eliminated level of long chain branching. This first component may be selected from, in one non-limiting embodiment, one or more ethylene/α-olefin copolymers. Such copolymer may be a semi-crystalline polymer that has a melting point of less than 120 °C. More desirably the melting point is less than 110 °C, and most preferably less than 100 °C. In another embodiment, the melting point may be from 25 °C, preferably 40 °C, more preferably 59 °C, to 100 °C, more preferably to 85 °C.

The ethylene/α-olefin copolymer desirably has a density from 0.865 g/cm³ to 0.905 g/cm³ and a molecular weight distribution from 1.1 to 3.5, preferably from 1.5 to 3.5, more preferably from 1.8 to 3.0, and still more preferably from 1.8 to 2.5. Such is desirably homogeneously branched and either linear or substantially linear. The terms "homogeneous" and "homogeneously-branched" are used in reference to an ethylene/α-olefin copolymer, in which the α-olefin comonomer is randomly distributed within a given polymer molecule, and all of the polymer molecules have the same or substantially the same comonomer/ethylene ratio. The homogeneously branched ethylene/α-olefin copolymers include homogeneously branched linear ethylene/α-olefin copolymers, and homogeneously branched substantially linear ethylene/α-olefin copolymers.

Included among the homogeneously branched linear ethylene/α-olefin copolymers are ethylene copolymers, which lack long chain branching (or measurable amounts of long chain branching), but do have short chain branches, derived from the comonomer polymerized into the copolymer, and which comonomer is homogeneously distributed, both within the same polymer chain, and between different polymer chains. That is, homogeneously branched linear ethylene/α-olefin copolymers lack long chain branching, just as is the case for the linear low density ethylene/α-olefin copolymers, and can be made using "uniform branching distribution" polymerization processes, as described, for example, by Elston in U.S. Patent 3,645,992. Commercial examples of homogeneously branched linear ethylene/α-olefin copolymers include TAFMER^{™} polymers supplied by the Mitsui Chemical Company, and EXACT^{™} polymers supplied by the ExxonMobil Chemical Company.

The homogeneously branched, linear or substantially linear ethylene/α-olefin copolymers are described in, for example, U.S. Patent Nos. 5,272,236; 5,278,272; 6,054,544; 6,335,410 and 6,723,810; each fully incorporated herein by reference. These copolymers are those in which the comonomer is randomly distributed within a given polymer molecule, and in which all of the polymer molecules have the same or substantially the same comonomer/ethylene ratio. In addition, these copolymers have long chain branching (chain branch has more carbon atoms than a branch formed by the incorporation of one comonomer into the polymer backbone). The long chain branches have the same comonomer distribution as the polymer backbone, and can have about the same length as the length of the polymer backbone. "Substantially linear," typically, refers to a polymer that is substituted, on average, with from 0.01 long chain branch per 1000 carbons to 3 long chain branches per 1000 carbons. Polymers of this type may be selected from among the ENGAGE^{™} and AFFINITY^{™} products available from The Dow Chemical Company. In contrast to the homogeneously branched, substantially linear ethylene/α-olefin copolymers, the homogeneously branched linear ethylene/α-olefin copolymers lack measurable or demonstrable long chain branches.

The homogeneously branched substantially linear ethylene/α-olefin copolymers form a unique class of homogeneously branched ethylene polymers. They differ from the homogeneously branched linear ethylene/α-olefin copolymers, described by Elston in U.S. Patent 3,645,992, and, moreover, they are not in the same class as conventional heterogeneous, "Ziegler-Natta catalyst polymerized" linear ethylene/α-olefin copolymers (for example, LLDPE, ULDPE and VLDPE), made, for example, using the technique disclosed by Anderson et al., in U.S. Patent 4,076,698); nor are they in the same class as high pressure, free-radical initiated, highly branched polyethylenes, such as, for example, low density polyethylene (LDPE), ethylene-acrylic acid (EAA) copolymers, and ethylene vinyl acetate (EVA) copolymers.

The homogeneously branched, substantially linear ethylene/α-olefin copolymers have excellent processability, even though they have a relatively narrow molecular weight distribution. Surprisingly, the melt flow ratio (I₁₀/I₂), measured according to ASTM D 1238-04, of the substantially linear ethylene/α-olefin copolymers can be varied widely and essentially independently of the molecular weight distribution (M_{w}/Mₙ or MWD). This surprising behavior is completely contrary to the homogeneously branched linear ethylene/α-olefin copolymers described, for example, by Elston in U.S. 3,645,992, and heterogeneously branched "conventional Ziegler-Natta polymerized" linear ethylene/α-olefin copolymers, such as those described, for example, by Anderson, et al. in U.S. 4,076,698. Unlike the substantially linear ethylene/α-olefin copolymers, linear ethylene/α-olefin copolymers (whether homogeneously or heterogeneously branched) have rheological properties, such that, as the molecular weight distribution increases, the I₁₀/I₂ value also increases.

In order to determine the degree of "long chain branching (LCB)," conventional industry techniques may be used. Among these are ¹³C nuclear magnetic resonance (¹³C NMR) spectroscopy, using, for example, the method of Randall (Rev. Micromole. Chem. Phys., 1989, C29 (2&3), p. 285-297). Two other methods are gel permeation chromatography, coupled with a low angle laser light scattering detector (GPC-LALLS), and gel permeation chromatography, coupled with a differential viscometer detector (GPC-DV). The use of these techniques for long chain branch detection, and the underlying theories, have been well documented in the literature. See, for example, Zimm, B.H. and Stockmayer, W.H., J. Chem. Phys., 17, 1301(1949), and Rudin, A., Modern Methods of Polymer Characterization, John Wiley & Sons, New York (1991) pp. 103-112.

The homogeneously branched ethylene/α-olefin copolymers may have a melt flow rate in the range of from 0.1 to 30 g/10 minutes, measured in accordance with ASTM D-1238 (at 190 °C / 2.16 kg). All individual values and subranges from 0.1 to 30 g/10 minutes are included herein and disclosed herein; for example, the melt flow rate can be from a lower limit of 0.1 g/10 minutes, 0.2 g/10 minutes, 0.5 g/10 minutes, 2 g/10 minutes, 4 g/10 minutes, 5 g/10 minutes, 10 g/10 minutes, or 15 g/10 minutes to an upper limit of 25 g/10 minutes, 20 g/10 minutes, 18 g/10 minutes, 15 g/10 minutes, 10 g/10 minutes, 8 g/10 minutes, or 5 g/10 minutes. For example, the propylene/α-olefin copolymer may have a melt flow rate in the range of from 0.1 to 20 g/10 minutes; or from 0.1 to 18 g/10 minutes; or from 0.1 to 15 g/10 minutes; or from 0.1 to 12 g/10 minutes; or from 0.1 to 10 g/10 minutes; or from 0.1 to 5 g/10 minutes.

The homogeneously branched ethylene/α-olefin copolymers will preferably have a single melting peak, as measured using Differential Scanning Calorimetry (DSC), in contrast to heterogeneously branched ethylene/α-olefin copolymers, which have two or more melting peaks, due to the heterogeneously branched polymer's broad short chain branching distribution.

The selected ethylene/α-olefin copolymer has a desired crystallinity in the range of from at least 10 percent by weight (a heat of fusion of at least 29 joules per gram, J/g) to 38 percent by weight (a heat of fusion of less than 110 J/g). All individual values and subranges from 10 percent by weight (a heat of fusion of at least 29 J/g) to 38 percent by weight (a heat of fusion of less than 110 J/g) are included herein and disclosed herein; for example, the crystallinity can be from a lower limit of 10 percent by weight (a heat of fusion of at least 29 J/g), 13 percent (a heat of fusion of at least 38 J/g), or 18 percent by weight (a heat of fusion of at least 53 J/g) to an upper limit of 38 percent by weight (a heat of fusion of less than 110 J/g), 34 percent by weight (a heat of fusion of less than 100 J/g), 31 percent by weight (a heat of fusion of less than 90 J/g).

For example, the ethylene/α-olefin copolymer may have a crystallinity in the range of from at least 13 percent by weight (a heat of fusion of at least 38 J/g) to 36 percent by weight (a heat of fusion of less than 105 J/g); or in the alternative, from at least 16 percent by weight (a heat of fusion of at least 47 J/g) to 34 percent by weight (a heat of fusion of less than 100 J/g).

The crystallinity is measured via the Differential Scanning Calorimetry (DSC) method, which measure the heats of fusion of the melting temperature of the base polymers. The preferred method, as used to obtain the heats of fusion for the materials in the Examples and Comparative Examples hereinafter, is to employ a TA Instruments Q1000 DSC equipped with an RCS cooling accessory and an auto sampler. A nitrogen purge gas flow of 50 milliliter per minute (mL/min) is used. About 3 to10 mg of material is cut, accurately weighed, and placed in a light aluminum pan (approximately 50 mg) which is later crimped shut. The thermal behavior of the sample is investigated with the following temperature profile: The sample is rapidly heated to 190 °C and held isothermal for 3 minutes in order to remove any previous thermal history. The sample is then cooled to -90 °C at 10 °C/min cooling rate and held at -90 °C for 3 minutes. The sample is then heated to 190 °C at a 10 °C/min heating rate. The cooling and second heating curves are recorded. For the heat of fusion measurements for the polyolefinic resins, as known and routinely performed by skilled practitioners in this area, the baseline for the calculation is drawn from the flat initial section prior to the onset of melting and extends to the end of melting for the second heating curve.

The ethylene/α-olefin copolymer comprises units derived from ethylene and polymeric units derived from one or more a-olefin comonomers. Exemplary comonomers utilized to manufacture the ethylene/α-olefin copolymer are C₂, and C₄ to C₁₀ α-olefins; for example, C₂, C₄, C₆ and C₈ α-olefins.

In another example, Component A may be a propylene-based copolymer. Such copolymer may be a semi-crystalline polymer and has a melting point of less than 120 °C. More desirably the melting point is less than 110 °C, and most preferably less than 100 °C. In another embodiment, the melting point may be from 25 °C, preferably 40 °C, more preferably 59 °C, to 100 °C, more preferably to 85 °C.

In one particular embodiment, the propylene-based elastomer is a propylene/α-olefin copolymer, which is characterized as having substantially isotactic propylene sequences. "Substantially isotactic propylene sequences" means that the sequences have an isotactic triad (mm) measured by ¹³C NMR of greater than about 0.85; in the alternative, greater than about 0.90; in another alternative, greater than about 0.92; and in another alternative, greater than about 0.93. Isotactic triads are well-known in the art and are described in, for example, U.S. Patent No. 5,504,172 and International Publication No. WO 00/01745, which refer to the isotactic sequence in terms of a triad unit in the copolymer molecular chain determined by ¹³C NMR spectra.

The propylene/α -olefin copolymer may have a melt flow rate in the range of from 0.1 to 25 g/10 minutes, measured in accordance with ASTM D-1238 (at 230 °C / 2.16 kg). All individual values and subranges from 0.1 to 35 g/10 minutes are included herein and disclosed herein; for example, the melt flow rate can be from a lower limit of 0.1 g/10 minutes, 0.2 g/10 minutes, 0.5 g/10 minutes, 2 g/10 minutes, 4 g/10 minutes, 5 g/10 minutes, 10 g/10 minutes, or 15 g/10 minutes to an upper limit of 35 g/10 minutes, 20 g/10 minutes, 18 g/10 minutes, 15 g/10 minutes, 10 g/10 minutes, 8 g/10 minutes, or 5 g/10 minutes. For example, the propylene/α-olefin copolymer may have a melt flow rate in the range of from 0.1 to 20 g/10 minutes; or from 0.1 to 18 g/10 minutes; or from 0.1 to 15 g/10 minutes; or from 0.1 to 12 g/10 minutes; or from 0.1 to 10 g/10 minutes; or from 0.1 to 5 g/10 minutes.

The propylene/α-olefin copolymer has a crystallinity in the range of from at least 1 percent by weight (a heat of fusion of at least 2 joules per gram, J/g) to 40 percent by weight (a heat of fusion of less than 66 J/g). All individual values and subranges from 1 percent by weight (a heat of fusion of at least 2 J/g) to 40 percent by weight (a heat of fusion of less than 66 J/g) are included herein and disclosed herein; for example, the crystallinity can be from a lower limit of 1 percent by weight (a heat of fusion of at least 2 J/g), or 3 percent (a heat of fusion of at least 5 J/g) to an upper limit of 40 percent by weight (a heat of fusion of less than 66 J/g), 30 percent by weight (a heat of fusion of less than 540 J/g), 15 percent by weight (a heat of fusion of less than 24.8 J/g) or 7 percent by weight (a heat of fusion of less than 11 J/g).

For example, the propylene/α-olefin copolymer may have a crystallinity in the range of from at least 4 percent by weight (a heat of fusion of at least 7 J/g) to 30 percent by weight (a heat of fusion of less than 50 J/g); or in the alternative, the propylene/α-olefin copolymer may have a crystallinity in the range of from at least 7 percent by weight (a heat of fusion of at least 12 J/g) to 30 percent by weight (a heat of fusion of less than 50 J/g); or in the alternative, the propylene/α-olefin copolymer may have a crystallinity in the range of from at least 12 percent by weight (a heat of fusion of at least 20 J/g) to 30 percent by weight (a heat of fusion of less than 50 J/g). The crystallinity is measured via Differential scanning calorimetry (DSC) method. The propylene/α-olefin copolymer comprises units derived from propylene and polymeric units derived from one or more α-olefin comonomers. Exemplary comonomers utilized to manufacture the propylene/α-olefin copolymer are C₂, and C₄ to C₁₀ α-olefins; for example, C₂, C₄, C₆ and C₈ α-olefins. The propylene/α-olefin copolymer comprises units derived from propylene and polymeric units derived from one or more α-olefin comonomers. Exemplary comonomers utilized to manufacture the propylene/α-olefin copolymer are C₂, and C₄ to C₁₀ α-olefins; for example, C₂, C₄, C₆ and C₈ α-olefins.

The propylene/α-olefin copolymer comprises from 1 to 40 percent by weight of units derived from one or more α-olefin comonomers. All individual values and subranges from 1 to 40 weight percent are included herein and disclosed herein; for example, the weight percent (wt%) of units derived from one or more α-olefin comonomers can be from a lower limit of 1, 3, 4, 5, 7, or 9 wt% to an upper limit of 40, 35, 30, 27, 20, 15, 12, or 9 wt%. For example, the propylene/α-olefin copolymer may comprise from 1 to 35 wt% of units derived from one or more α-olefin comonomers; or in the alternative, from 1 to 30 wt%; or in the alternative, from 3 to 27 wt%; or in the alternative, from 3 to 20 wt%; or in the alternative, from 3 to 15 wt%, of units derived from one or more α-olefin comonomers.

The propylene/α-olefin copolymer has a (MWD), defined as weight average molecular weight divided by number average molecular weight (M_{w}/Mₙ), of 3.5 or less. In another alternative the MWD is preferably from 1.1 to 3.5, more preferably from 1.5 to 3.5, still more preferably from 1.8 to 3.0, and most preferably from 1.8 to 2.5.

Such propylene/α-olefin copolymers are further described in details in the U.S. Patent Nos. 6,960,635 and 6,525,157, incorporated herein by reference. Such propylene/α-olefin copolymers are commercially available from The Dow Chemical Company, under the tradename VERSIFY^{™}, or from ExxonMobil Chemical Company, under the tradename VISTAMAXX^{™}.

In one embodiment, the propylene/α-olefin copolymers are further characterized as comprising (a) between 60 and less than 100, preferably between 80 and 99 and more preferably between 85 and 99, wt% of units derived from propylene, and (b) between greater than zero and 40, preferably between 1 and 20, more preferably between 4 and 16 and even more preferably between 4 and 15, wt% of units derived from at least one of ethylene and/or of a C₄₋₁₀ α-olefin; and containing an average of at least 0.001, preferably an average of at least 0.005 and more preferably an average of at least 0.01, long chain branches per 1000 total carbons, wherein the term long chain branch, as used herein with regards to propylene/α-olefin copolymers, refers to a chain length of at least one (1) carbon more than a short chain branch, and short chain branch, as used herein, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. The maximum number of long chain branches typically does not exceed 3 long chain branches per 1000 total carbons. Such propylene/α-olefin copolymers are further described in detail in U.S. Provisional Patent Application No. 60/988,999 and International Patent Application No. PCT/US08/082599, each of which is incorporated herein by reference.

Where the base polymer is ethylene-based, the density is preferably from 0.860 to 0.900 g/cm³, with a melt flow index I₂ (as measured according to ASTM D 1238) of from 0.5 to 30 g/10 min at 190°C. In that case the concentration of Component A may range from 60 to 95 wt%.

Where the base polymer is propylene-based, the density is preferably from 0.860 to 0.880 g/cm³, and the melt flow rate (MFR, as measured according to ASTM D 1238) desirably from 2 to 30 g/10 min at 230 °C. In that case the concentration of Component A may range from 60 to 95 wt%.

The polyolefin formulation may include more than one type of polymer selected from the group of base polymers, thus potentially including more than one Component A. Inclusion of more than one polyolefin in the base polymer is optional to the invention, but if included may differ, within the limits provided hereinabove, from any other selection of base polymer in at least one property selected from density (as measured according to ASTM D 792), melt flow index (I₂) (according to ASTM D 1238), melt flow rate (MFR) (according to ASTM D 1238), and melting temperature (according to DSC). For example, in one embodiment a second base polymer selection may be ethylene-based and have a melt flow index I₂ of 15 g/10 min at 190 °C, while a first base polymer choice may have a melt flow index I₂ of 3 g/10 min at 190 °C. The combination of two or more base polymer choices may be customized to provide desirable levels of processability for extrusion and/or molding. Furthermore, it is preferred that, where one choice of base polymer is ethylene-based, the other is also ethylene-based; and where one choice of base polymer is propylene-based, the other is also propylene-based.

A key feature of the invention is inclusion in the polyolefin-based formulation of at least one secondary component, designated herein as Component B. This secondary component is a polymer, or polymers, selected from the group consisting of ethylene vinyl acetate (EVA) polymers having from 5 wt% to 40 wt% vinyl acetate, preferably from 5 wt% to 30 wt% of vinyl acetate (VA); ethylene-ethyl acrylate (EEA) polymers, having from 5 to 25 wt% ethyl acrylate (EA), preferably from 10 wt% to 20 wt%; and combinations thereof. The amount of the secondary, polar polymer(s) may range from 10 wt% to 40 wt%, preferably from 10 wt% to 30 wt%, and most preferably from 20 wt% to 30 wt%, based on the weight of the formulation as a whole.

In addition to the base polymer (Component A) and the secondary component (Component B), the formulations of the invention may include one or more additional components, designated herein as Component C. Such may include additional polymeric components, such as polypropylene (PP), random copolymer polypropylene (RCP); high density polyethylene (HDPE); low density polyethylene (LDPE), linear low density polyethylene (LLDPE); and the like. Such additional polymeric components may be added for, in particular, control of modulus and/or hand-feel. It is preferred that Component B be less than or equal to Component A, and it is further preferred that any optional additional polymeric component (Component C) be present in an amount ranging from 0 to 30 wt% based on the formulation as a whole, more preferably from 5 to 30 wt%, and still more preferably from 5 to 25 wt%.

Finally, additives may also be included in the polyolefin-based formulation, such as will be well-known and understood to those skilled in the art. For example, the use of antioxidants, such as IRGAFOS^{™} products; ultraviolet light protectants; fire retardancy additives, such as halogenated flame retardant, i.e. decabromodiphenyl ether/ethane; slip agents and processing agents; and anti-blocking agents; in polyolefin formulations is common. Such additives may improve both the processability of the formulation as well as the eventual performance and appearance of the final product.

In general the base polymer(s), secondary component polar polymer(s), any additional optional polymeric components, and any desired optional additives are combined using industry-known methodology. Such may include, typically, compounding via extrusion equipment such as twin-screw extruders; pelletization; cast film extrusion; and/or sheet calendering. Welding may be carried out using any known and effective high frequency welding conditions, adjusting Clayton setting as appropriate to optimize the efficiency of the electrical circuit through the substrate, or portions of a single substrate, being welded.

It is generally desired that the welding be able to be completed in less than 8 seconds, preferably less than 7 seconds, more preferably less than 6 seconds, and most preferably less than 5 seconds. This time is referred to as "weld time."

It is also desirable that the failure of the polyolefin formulation, defined as including the formulation as a whole, be cohesive in nature. This means that failure happens in the bulk polymer instead of at the surface, when the welded structure is peeled to measure the weld strength.

Finally, it is desirable that the weld strength, as measured in pound per inch (Ib/in), be at least 5 lb/in, for a 10 mil thick film, more preferably at least 7 lb/in. These weld strengths are equivalent to, respectively, 0.88 N/mm and 1.23 N/mm.

The HF-weldable compositions of the present invention allow for convenient formation into substrates, such as extruded films, sheets or molded pieces, including both injection and compression molded pieces, which may serve as or be included in other polyolefin articles. The welded articles may exhibit desirable properties such as Ultimate Tensile Strength ranging from 1600 to 4000 psi, according to ASTM D 638; Ultimate Tensile Elongation ranging from 300 % to 1200 %, measured according to ASTM D 638; and Elmendorf Tear, Type B ranging from 200 to 500 g/mil.

### EXAMPLES

The materials used in the following Examples are defined in Tables 1 and 2 as follows:

**Table 1. Polyolefin Base Polymers**

| Tradename | Density (g/cm³) | Melting Point (°C) | Heat of Fusion ΔHf (J/g) | MI (@190°C) or MFR* (@230°C) (g/10 min) | Main Monomer | Co-monomer |
|---|---|---|---|---|---|---|
| VERSIFY^{™} 4200 | 0.876 | 82 | 40 | 25* | Propylene | Ethylene |
| VERSIFY^{™} 3200 | 0.876 | 85 | 40 | 8* | Propylene | Ethylene |
| VERSIFY^{™} 2200 | 0.876 | 82 | 40 | 2* | Propylene | Ethylene |
| VERSIFY^{™} 3000 | 0.8890 | 108 | 60 | 8* | Propylene | Ethylene |
| VERSIFY^{™} 2000 | 0.888 | 107 | 60 | 2* | Propylene | Ethylene |
| AFFINITY^{™} PL1850 | 0.902 | 98 | 104 | 3 | Ethylene | 1-Octene |
| AFFINITY^{™} KC 8852G | 0.875 | 68 | 55 | 3 | Ethylene | 1-Octene |
| DOWLEX^{™} SC2107G | 0.917 | 123 | 120 | 2.3 | Ethylene | 1-Octene |
| DOW^{™} LDPE PG7008 | 0.918 | 106 | 121 | 7.5 | Ethylene | -- |

**Table 2. Secondary Polar Polymers (EVA Copolymer and EEA Copolymer)**

| Tradename | Melting Point (°C) | Vinyl Acetate Content (wt%) | Ethyl Acrylate Content (wt%) | MI (@ 190°C) |
|---|---|---|---|---|
| ELVAX^{™} 450 | 86 | 18 | -- | 8 |
| EXVAX^{™} 460 | 88 | 18 | -- | 2.5 |
| ELVAX^{™} 470 | 89 | 18 | -- | 0.7 |
| ELVAX^{™} 260 | 75 | 28 | -- | 6 |
| ELVAX^{™} 265 | 73 | 28 | -- | 3 |
| AMPLIFY^{™} EA 101 | 98 | -- | 18.5 | 6 |

The methods used to characterize the base polymers and also the resulting formulated polyolefin films both before and after HF welding are defined in Table 3.

**Table 3. Properties Testing Methods**

| Property | Method | Comments |
|---|---|---|
| Density (g/cm³) | ASTM D 792 | -- |
| Melt Index (g/10 min) | ASTM D 1238 | (2.16 kg @ 190°C) |
| Melt Flow Rate (g/10 min) | ASTM D 1238 | 2.16 kg @ 230°C) |
| DSC Melting Peak (°C) | -- | Rate 10°C/min (2^{nd} heat) |
| Ultimate Tensile Strength (MPa) | ASTM D 638 | (508 mm/min) |
| Ultimate Tensile Elongation (%) | ASTM D 638 | (508 mm/min) |
| Tear Elmendorf - Type B (g) | ASTM D1922 | Constant radius specimens |
| Weld Strength (Ib/in) | ASTM F 88 | (508 mm/min) |

### Examples 1-6 and Comparative Examples A-H

A series of blends corresponding to Table 4 are prepared and compounded using a Coperion ZSK-26 MC 60 length to diameter ratio (L/D) extruder operated at 300 revolutions per minute (RPM) and temperatures at 140 °C. Total throughput is 50 pounds per hour (lb/hr). The strand is water-bath cooled and strand-cutter pelletized in pellet form. Blends designated with numbers are examples of the invention, and blends designated with letters are comparative examples.

The compounded blend in pellet form is extruded with a Haake single extruder (3/4-inch diameter and 25 L/D attached with a tape/slot die. The typical extrusion condition is applied (approximately 50 revolutions per minute (rpm) and temperature profile from 140 °C to 190 °C). The extrudate is taken off on a chill rolls system with 3 rolls configurations. The temperature of the chill roll is controlled at about 15 °C. The finished tape films are collected on a wind-up system and the dimension of the tapes are from 3.5 to 4 inches (in) wide and 10 or 15 mils (0.254 or 0.381 millimeters) thick.

Welding is carried out on the extruded tape films using a Callanan RF Welder. The power output of the Callanan RF Welder is 2 kilowatt (kW) and the operation/generator frequency is 27.12 megahertz (MHz). Seal bar/die dimension is (0.5 inch x 8 inches). The films are sealed in machine direction. During the RF welding process, the films to be welded are placed between the seal bar and the bottom metal plate. The seal bar is brought down to the bottom metal plate via a pneumatic cylinder at 30 psi (206.8 kilopascals (kPa)) pressure and the films are pressed between the bar and the plate when an RF frequency is applied.

The power level setting can be adjusted from 0% to 100%. The typical setting is 80% to 90% for the present invention. Typical weld time employed is 2 to 4 seconds.

In order to tune the RF welder, the Clayton setting is adjusted to optimize the resonant frequency of the work piece. The maximum power can be coupled, out of the generator, when the resonant frequency of the work piece is nearly resonant at the output frequency of the generator (27.12 MHz).

Weld strength measurement is carried out on the welded films by cutting them into 1 inch wide stripes in the cross machine direction (CD). These stripes are then pulled in the CD direction using an Instron instrument per ASTM F 88. The Peak Load during pulling is recorded as the weld strength, in pound per inch (Ib/in).

**Table 4. Testing Results**

| Blend | ELVAX^{™} 450 (wt%) | ELVAX^{™} 470 (wt%) | ELVAX^{™} 260 (wt%) | VERSIFY^{™} 4200 (wt%) | VERSIFY^{™} 2200 (wt%) | Weld Strength* (lb/in) | Cohesive Fail (Yes/No) |
|---|---|---|---|---|---|---|---|
| 1 | 40 | -- | -- | 60 | -- | 11.0 | Yes |
| 2 | -- | 40 | -- | -- | 60 | 10.8 | No |
| 3 | -- | 40 | -- | 60 | -- | 12.1 | Yes |
| 4 | 40 | -- | -- | -- | 60 | 11.6 | Yes |
| 5 | -- | -- | 40 | 60 | -- | 11.3 | Yes |
| 6 | -- | -- | 40 | -- | 60 | 13.0 | Yes |
| A | -- | 60 | -- | 40 | -- | 10.4 | Yes |
| B | -- | 60 | -- | -- | 40 | 11.1 | Yes |
| C | 60 | -- | -- | 40 | -- | 9.3 | Yes |
| D | 60 | -- | -- | -- | 40 | 11.0 | Yes |
| E | -- | -- | 60 | -- | 40 | 8.8 | Yes |
| F | 25 | -- | 25 | 25 | 25 | 10.8 | Yes |
| G | -- | -- | 60 | 40 | -- | 14.6 | Yes |
| H | 25 | 25 | -- | 25 | 25 | 10.7 | Yes |

| | | | | | | | |
|---|---|---|---|---|---|---|---|
| *Welding conditions: Clayton setting 20 power 80%, weld time 4 sec **Film thickness is 10 mils | | | | | | | |

The inventive examples (Example 1-6) which have no more than 40 wt% Ethylene-Vinyl Acetate (EVA) with VA content between 18 wt% to 28 wt%, exhibit weld strengths greater than 10 lb/in. The comparative examples (Example A-H), which have EVA contents greater than 50 wt%, did not achieve a higher weld strength than the inventive examples, and in a few cases (Comparative Examples C and E) exhibited lower weld strength.

### Examples 7-12 and Comparative Examples I-G

A series of blends are prepared using polypropylene-based polymers, specifically VERSIFY^{™} 3200 and VERSIFY^{™} 2200 as base polymers. All preparation and welding is done as described for the previous Examples 1-6 and Comparative Examples A-H, except for the differences in welding conditions and film thickness as noted.

**Table 5. Testing results at 15 mils thickness**

| Blend | VERSIFY^{™} 3200 (wt%) | VERSIFY^{™} 2200 | ELVAX^{™} 460 (wt%) | ELVAX ^{™} 265 (wt%) | Weld Strength* (lb/in) | Cohesive Fail (Yes/No) |
|---|---|---|---|---|---|---|
| 7 | 40 | 40 | 20 | -- | 20.6 | Yes |
| 8 | 35 | 35 | 30 | -- | 18.5 | Yes |
| 9 | 30 | 30 | 40 | -- | 16.3 | Yes |
| 10 | 40 | 40 | -- | 20 | 22.1 | Yes |
| 11 | 35 | 35 | -- | 30 | 19.3 | Yes |
| 12 | 30 | 30 | -- | 40 | 12.5 | Yes |
| I | 20 | 20 | 60 | - | 2.4 | No |
| G | 20 | 20 | -- | 60 | 10.0 | Yes |

| | | | | | | |
|---|---|---|---|---|---|---|
| *Welding conditions: Clayton setting 22, power 90%, weld time 4 sec | | | | | | |

**Table 6. Testing results at 10 mils thickness**

| Blend | VERSIFY^{™} 3200 (wt%) | VERSIFY^{™} 2200 (wt%) | ELVAX^{™} 460 (wt%) | ELVAX ^{™} 265 (wt%) | Weld Strength* (lb/in) | Cohesive Fail (Yes/No) |
|---|---|---|---|---|---|---|
| 7 | 40 | 40 | 20 | -- | 13.9 | Yes |
| 8 | 35 | 35 | 30 | -- | 14.9 | Yes |
| 9 | 30 | 30 | 40 | -- | 10.8 | No |
| 10 | 40 | 40 | -- | 20 | 12.6 | Yes |
| 11 | 35 | 35 | -- | 30 | 13.4 | Yes |
| 12 | 30 | 30 | -- | 40 | 8.9 | No |
| I | 20 | 20 | 60 | -- | 8.9 | No |
| G | 20 | 20 | -- | 60 | 10.0 | No |

| | | | | | | |
|---|---|---|---|---|---|---|
| *Welding conditions: Clayton setting 20, power 90%, weld time 4 sec | | | | | | |

**Table 7. Testing results for tensile strength and Elmendorf tear at 10 mils thickness**

| Blend | Tensile | | | | Tear: Elmendorf |
|---|---|---|---|---|---|
| | Avg. strain at break (%) | Avg. strain at yield (%) | Avg. stress at break (psi) | Avg. stress at yield (psi) | Average normalized readings (g/mil) |
| 7 | 391 | 16.4 | 4890 | 1370 | 197 |
| 8 | 387 | 13.9 | 4794 | 1286 | 152 |
| 9 | 298 | 14.6 | 5223 | 1564 | 32 |
| 10 | 407 | 13.5 | 4835 | 1300 | 170 |
| 11 | 402 | 20.6 | 5460 | 1432 | 242 |
| 12 | 314 | 19.9 | 3780 | 9730 | 161 |
| I | 252 | 12.4 | 3741 | 1113 | 33 |
| G | 389 | 32.1 | 4130 | 949 | 165 |

| | | | | | |
|---|---|---|---|---|---|
| *Welding conditions: Clayton setting 20, power 90%, weld time 4 sec | | | | | |

Table 5 and Table 6 show that the inventive Examples 7-12 exhibit considerably higher RF weld strengths than Comparative Examples I-G, which each including more than 50 wt% EVA. The VERSIFY^{™} 3200/VERSIFY^{™} 2200 systems that have an EVA content of 20 to 30 wt% generally provide the best welding strengths hereinabove, and also higher tensile stress and Elmendorf tear strengths.

### Examples 13-21 and Comparative Examples K-L

Following the compounding, extruding and welding procedures of previous Examples and Comparative Examples, additional blends are prepared and tested for properties as shown in Tables 8 and 9. These blends are prepared using ethylene-based copolymers, specifically AFFINITY ^{™} KC 8852G and AFFINITY^{™} PL 1850, as base polymers.

**Table 8. Testing results at 10 mils thickness**

| Blend | AFFINITY^{™} KC 8852G | AFFINITY^{™} PL1850 (wt%) | ELVAX^{™} 460 (wt%) | ELVAX ^{™} 265 (wt%) | Weld Strength* (lb/in) | Cohesive Fail (Yes/No) |
|---|---|---|---|---|---|---|
| 13 | 90 | -- | 10 | -- | 8.5 | Yes |
| 14 | 80 | -- | 20 | -- | 8.7 | Yes |
| 15 | 70 | -- | 30 | -- | 9.1 | Yes |
| 16 | 60 | -- | 40 | -- | 10.8 | Yes |
| 17 | 45 | 45 | 10 | -- | 7.3 | Yes |
| 18 | 40 | 40 | 20 | -- | 10.3 | Yes |
| 19 | -- | 70 | 30 | -- | 11.5 | Yes |
| 20 | -- | 60 | 40 | -- | 11.4 | Yes |
| 21 | -- | 60 | -- | 40 | 9.4 | Yes |
| K | -- | 40 | 60 | -- | 7.9 | No |
| L | -- | 40 | -- | 60 | 13.4 | Yes |

| | | | | | | |
|---|---|---|---|---|---|---|
| *Welding conditions: Clayton setting 21, power 90%, weld time 4 sec | | | | | | |

**Table 9. Testing results for tensile strength and Elmendorf tear at 10 mils thickness**

| Blend | Tensile | | | | Tear: Elmendorf |
|---|---|---|---|---|---|
| | Avg. strain at break (%) | Avg. strain at yield (%) | Avg. stress at break (psi) | Avg. stress at yield (psi) | Average normalized readings (g/mil) |
| 13 | 323 | 73 | 2898 | 1094 | 116 |
| 14 | 312 | 63 | 3143 | 1260 | 131 |
| 15 | 294 | 71 | 2752 | 1106 | 137 |
| 16 | 276 | 50 | 3168 | 1529 | - |
| 17 | 182 | 42 | 3983 | 1686 | 260 |
| 18 | 188 | 59 | 4142 | 2503 | 274 |
| 19 | 310 | 57 | 4584 | 1865 | 301 |
| 20 | 232 | 48 | 4555 | 2197 | 250 |
| 21 | 431 | 16 | 3672 | 762 | 273 |
| K | 400 | 15 | 3750 | 769 | 99 |
| L | 267 | 18 | 3197 | 853 | - |

The inventive examples (Example 13-21) are formulated using ethylene-based copolymers, specifically AFFINITY ^{™} KC 8852G and AFFINITY ^{™} PL 1850, as base polymers. Among all the inventive examples, there are the same findings regarding the effect of EVA content on the RF weldability. A relative low EVA content (20 wt% to 40 wt%) in polyolefin formulation is required to yield good RF weldability (cohesive welded structure) and strong weld strength (greater than 5 lb/in, alternatively greater than 6 lb/in, alternatively greater than 7 lb/in) in these examples. In addition, it is discovered that by lowering the melting temperature of the base polymer (Examples 13, 14, 17, and 18) enables use of even lower content (10 wt% to 20 wt%) of a secondary component (EVA) without sacrificing the desired welded structure.

### Example 22 and Comparative Example M

Following similar preparation of samples as in previous examples and comparative examples, formulations adhering to the description in Table 10 are tested with the results shown.

**Table 10. Testing results at 10 mils thickness**

| Blend | VERSIFY^{™} 3200 (wt%) | VERSIFY^{™} 2200 | AMPLIFY^{™} EA 101 | Peel Strength* (lb/in) | Cohesive Fail (Yes/No) |
|---|---|---|---|---|---|
| 22 | 30 | 30 | 40 | 10.1 | Yes |
| M | 20 | 20 | 60 | 8.6 | No |

| | | | | | |
|---|---|---|---|---|---|
| *Welding conditions: Clayton setting 21, power 90%, weld time 4 sec | | | | | |

The inventive example (Example 22) is formulated using EEA as the secondary component instead of EVA. It is discovered that EEA works well to provide especially good weldability, including peel strength and cohesive fail, at levels less than 50 wt% based on the formulation as a whole. At higher levels, both peel strength and cohesive failure appear to be reduced, although peel strength is still at a desirable level.

### Comparative Examples N-R

The comparative examples (Example N-R) are formulated using higher melting temperature polyolefin materials, specifically VERSIFY^{™} 3000, VERSIFY^{™} 2000 , DOWLEX ^{™} SC 2107G and DOW ^{™} LDPE PG7008, as base polymers. This shows that selection of base polymers having higher melting temperatures (greater than 100 °C) may be detrimental to weldability even where the secondary polymers are employed and welding conditions are consistent with previous examples and comparative examples.

**Table 11. Testing results at 10 mils thickness**

| Blend | VERSIFY^{™} 3000 (wt%) | VERSIFY^{™} 2000 (wt%) | DOWLEX^{™} SC2107G (wt%) | DOW^{™} LDPE PG7008 (wt%) | ELVAX^{™} 460 (wt%) | Peel Strength* (Ibf/in) | Cohesive Fail (Yes/No) |
|---|---|---|---|---|---|---|---|
| N | 30 | 30 | -- | -- | 40 | 5.5 | No |
| O | -- | -- | 60 | -- | 40 | 6.1 | No |
| P | -- | -- | 80 | -- | 20 | 0.5 | No |
| Q | -- | -- | -- | 80 | 20 | 0.1 | No |
| R | -- | -- | -- | 60 | 40 | 1.8 | No |

| | | | | | | | |
|---|---|---|---|---|---|---|---|
| *Welding conditions: Clayton setting 20, 21, power 90%, weld time 4 sec | | | | | | | |

The present invention can also be described as set out in the following numbered clauses:
1. A dielectrically weldable polyolefin formulation comprising
   (1) at least one base polymer selected from
      (a) a homogeneously branched, linear or substantially linear ethylene/α-olefin copolymer having a density from 0.865 to 0.905 grams per cubic centimeter and a melt index (measured at 190 °C at 2.16 kilograms) from 0.5 to 30 grams per 10 minutes;
      (b) a homogeneously branched propylene/α-olefin copolymer having a density from 0.863 to 0.885 grams per cubic centimeter and a melt flow rate (measured at 230 °C at 2.16 kilograms) from 2 to 30 grams per 10 minutes; and
      (c) combinations thereof;
      and
   (2) from 10 percent to 40 percent, based on the weight of the formulation as a whole, of at least one secondary component selected from
      (a) ethylene vinyl acetate having a vinyl acetate content ranging from 5 to 40 weight percent, based on the weight of the ethylene vinyl acetate;
      b) ethylene-ethyl acrylate having an ethyl acrylate content ranging from 5 to 25 weight percent, based on the weight of the ethylene-ethyl acrylate; and
      (c) combinations thereof.
2. An improvement in a method of forming a polyolefin-based article that includes (a) incorporating into a polyolefin formulation a component that is capable of being excited by a high frequency electromagnetic field; (b) forming a substrate from the polyolefin formulation, the substrate having at least one surface; and (c) subjecting the surface of the polyolefin substrate to the high frequency electromagnetic field under conditions such that the substrate is welded to a second surface of the polyolefin substrate or to a surface of a second polyolefin substrate to form a polyolefin-based article;
   wherein the improvement comprises
   (1) employing as a base polymer in the polyolefin formulation a polyolefin selected from the group consisting of
      (a) a homogeneously branched, linear or substantially linear ethylene/α-olefin copolymer having a density from 0.865 to 0.905 grams per cubic centimeter and a melt index (measured at 190°C at 2.16 kilograms) from 0.5 to 30 grams per 10 minutes;
      (b) a homogeneously branched propylene/α-olefin copolymer having a density from 0.863 to 0.885 grams per 10 minutesand a melt flow rate (measured at 230 °C at 2.16 kilograms) from 2 to 30 grams per 10 minutes; and
      (c) a combination thereof;
      provided that the base polymer has a melting temperature below 100 °C; and
   (2) including as a secondary component in the polyolefin formulation from 10 percent to 40 percent, based on the weight of the polyolefin formulation, of at least one polymer selected from
      (a) an ethylene vinyl acetate copolymer having a vinyl acetate content from 5 weight percent to 40 weight percent, based on the weight of the ethylene vinyl acetate copolymer;
      (b) an ethylene-ethyl acrylate copolymer having an ethyl acrylate content from 5 percent to 25 weight percent, based on the weight of the ethylene-ethyl acrylate copolymer; and
      (c) a combination thereof;
   such that the polyolefin substrate exhibits as properties a cohesive welding failure, and a weld strength for a substrate of 10 mil (0.254 millimeter) thickness that is greater than 7 pounds per inch (1.23 Newtons per millimeter) under welding conditions including less than or equal to 6 seconds welding time.
3. A high frequency welded polyolefin article according to clause 1 or 2 selected from the group consisting of medical devices selected from pressure cuffs and stabilization devices; inflatables selected from toys, watercraft, cushioning and furniture; sheetings selected from awnings, banners, signs, tents, tarpaulins, and liners for pools, ponds or landfills; book bindings; and carriers selected from sporting bags and backpacks.

## Claims

1. A dielectrically weldable polyolefin formulation comprising
(1) Component A, wherein component A is at least one base polymer which is (a) a homogeneously branched, linear or substantially linear ethylene/α-olefin copolymer having a density from 0.865 to 0.905 grams per cubic centimeter and a melt index (measured at 190 °C at 2.16 kilograms) from 0.5 to 30 grams per 10 minutes; wherein component A is present in a concentration of from 60 to 95 wt.%;
wherein the base polymer has a melting temperature below 100 °C;
wherein the homogeneously branched ethylene/α-olefin copolymer has a single melting peak, as measured using Differential Scanning Calorimetry (DSC);
and
(2) Component B, wherein Component B is from 10 percent to 40 percent, based on the weight of the formulation as a whole, of at least one secondary component that is
(b) ethylene-ethyl acrylate having an ethyl acrylate content ranging from 5 to 25 weight percent, based on the weight of the ethylene-ethyl acrylate.

2. An improvement in a method of forming a polyolefin-based article that includes (a) incorporating into a polyolefin formulation a component that is capable of being excited by a high frequency electromagnetic field; (b) forming a substrate from the polyolefin formulation, the substrate having at least one surface; and (c) subjecting the surface of the polyolefin substrate to the high frequency electromagnetic field under conditions such that the substrate is welded to a second surface of the polyolefin substrate or to a surface of a second polyolefin substrate to form a polyolefin-based article;
wherein the improvement comprises
(1) employing as a base polymer in the polyolefin formulation a polyolefin which is a
(a) a homogeneously branched, linear or substantially linear ethylene/α-olefin copolymer having a density from 0.865 to 0.905 grams per cubic centimeter and a melt index (measured at 190°C at 2.16 kilograms) from 0.5 to 30 grams per 10 minutes; wherein component A is at least one of the base polymer, wherein component A is in a concentration of from 60 to 95 wt.%; ;wherein the homogeneously branched ethylene/α-olefin copolymer has a single melting peak, as measured using Differential Scanning Calorimetry (DSC)
provided that the base polymer has a melting temperature below 100 °C; and
(2) including as a secondary component in the polyolefin formulation from 10 percent to 40 percent, based on the weight of the polyolefin formulation, of at least one polymer that is
(b) an ethylene-ethyl acrylate copolymer having an ethyl acrylate content from 5 percent to 25 weight percent, based on the weight of the ethylene-ethyl acrylate copolymer, wherein the secondary component is component B;
such that the polyolefin substrate exhibits as properties a cohesive welding failure, and a weld strength for a substrate of 10 mil (0.254 millimeter) thickness that is greater than 7 pounds per inch (1.23 Newtons per millimeter) under welding conditions including less than or equal to 6 seconds welding time.

3. A high frequency welded polyolefin article according to claim 1 selected from the group consisting of medical devices selected from pressure cuffs and stabilization devices; inflatables selected from toys, watercraft, cushioning and furniture; sheetings selected from awnings, banners, signs, tents, tarpaulins, and liners for pools, ponds or landfills; book bindings; and carriers selected from sporting bags and backpacks.

4. The dielectrically weldable polyolefin formulation of claim 1 or 3, or the improvement in a method according to claim 2, wherein the homogeneously branched, linear or substantially linear ethylene/α-olefin copolymer has a density from 0.865 to 0.900 grams per cubic centimeter.

## Patentansprüche

1. Dielektrisch schweißbare Polyolefinformulierung, umfassend
(1) Komponente A, wobei Komponente A mindestens ein Basispolymer ist, das
(a) ein homogen verzweigtes, lineares oder im Wesentlichen lineares Ethylen/α-Olefin-Copolymer, das eine Dichte von 0,865 bis 0,905 Gramm pro Kubikzentimeter und einen Schmelzindex (gemessen bei 190 °C bei 2,16 Kilogramm) von 0,5 bis 30 Gramm pro 10 Minuten aufweist, ist; wobei Komponente A in einer Konzentration von 60 bis 95 Gew.-% vorhanden ist;
wobei das Basispolymer eine Schmelztemperatur unter 100 °C aufweist;
wobei das homogen verzweigte Ethylen/α-Olefin-Copolymer einen einzigen Schmelzpeak aufweist, wie unter Verwendung von dynamischer Differenzkalorimetrie (DSC) gemessen;
und
(2) Komponente B, wobei Komponente B von 10 Prozent bis 40 Prozent, bezogen auf das Gewicht der Formulierung als Ganzes, mindestens einer sekundären Komponente ist, die
(b) Ethylen-Ethylacrylat, das einen Ethylacrylatgehalt in einem Bereich von 5 bis 25 Gewichtsprozent, bezogen auf das Gewicht des Ethylen-Ethylacrylats, aufweist, ist.

2. Verbesserung eines Verfahrens zum Ausbilden eines Artikels auf Polyolefinbasis, das einschließt: (a) ein Einbringen einer Komponente, die in der Lage ist, durch ein elektromagnetisches Hochfrequenzfeld angeregt zu werden, in eine Polyolefinformulierung; (b) Ausbilden eines Substrats aus der Polyolefinformulierung, wobei das Substrat mindestens eine Oberfläche aufweist; und (c) Aussetzen der Oberfläche des Polyolefinsubstrats dem elektromagnetischen Hochfrequenzfeld unter derartigen Bedingungen, dass das Substrat mit einer zweiten Oberfläche des Polyolefinsubstrats oder mit einer Oberfläche eines zweiten Polyolefinsubstrats verschweißt wird, um einen Artikel auf Polyolefinbasis auszubilden;
wobei die Verbesserung umfasst
(1) Einsetzen, als ein Basispolymer in der Polyolefinformulierung, eines Polyolefins, das ein
(a) ein homogen verzweigtes, lineares oder im Wesentlichen lineares Ethylen/α-Olefin-Copolymer, das eine Dichte von 0,865 bis 0,905 Gramm pro Kubikzentimeter und einen Schmelzindex (gemessen bei 190 °C bei 2,16 Kilogramm) von 0,5 bis 30 Gramm pro 10 Minuten aufweist, ist; wobei Komponente A mindestens eines des Basispolymers ist, wobei Komponente A in einer Konzentration von 60 bis 95 Gew.-% vorhanden ist; wobei das homogen verzweigte Ethylen/α-Olefin-Copolymer einen einzigen Schmelzpeak aufweist, wie unter Verwendung von dynamischer Differenzkalorimetrie (DSC) gemessen, mit der Maßgabe, dass das Basispolymer eine Schmelztemperatur unter 100 °C aufweist; und
(2) Einschließen, als eine sekundäre Komponente in der Polyolefinformulierung, von 10 Prozent bis 40 Prozent, bezogen auf das Gewicht der Polyolefinformulierung, mindestens eines Polymers, das
(b) ein Ethylen-Ethylacrylat-Copolymer, das einen Ethylacrylatgehalt von 5 Prozent bis 25 Gewichtsprozent, bezogen auf das Gewicht des Ethylen-Ethylacrylat-Copolymers, aufweist, ist, wobei die sekundäre Komponente Komponente B ist;
derart, dass das Polyolefinsubstrat als Eigenschaften ein kohäsives Versagen beim Schweißen und eine Schweißfestigkeit für ein Substrat von 10 mil (0,254 Millimeter) Dicke aufweist, die unter Bedingungen beim Schweißen, die eine Zeit beim Schweißen von weniger als oder gleich 6 Sekunden einschließen, größer als 7 Pfund pro Zoll (1,23 Newton pro Millimeter) ist.

3. Hochfrequenzgeschweißter Polyolefinartikel nach Anspruch 1, der aus der Gruppe ausgewählt ist, bestehend aus medizinischen Vorrichtungen, die aus Druckmanschetten und Stabilisierungsvorrichtungen ausgewählt sind; aufblasbaren Gegenständen, die aus Spielzeugen, Wasserfahrzeugen, Polsterungen und Möbeln ausgewählt sind; Bahnen, die aus Markisen, Bannern, Schildern, Zelten, Planen und Auskleidungen für Becken, Teiche oder Deponien ausgewählt sind; Bucheinbänden; und Transportbehältern, die aus Sporttaschen und Rucksäcken ausgewählt sind.

4. Dielektrisch schweißbare Polyolefinformulierung nach Anspruch 1 oder 3 oder Verbesserung eines Verfahrens nach Anspruch 2, wobei das homogen verzweigte, lineare oder im Wesentlichen lineare Ethylen/α-Olefin-Copolymer eine Dichte von 0,865 bis 0,900 Gramm pro Kubikzentimeter aufweist.

## Revendications

1. Formulation de polyoléfine soudable diélectriquement comprenant
(1) Composant A, dans lequel le composant A est au moins un polymère de base qui est
(a) un copolymère d'éthylène/α-oléfine ramifié de manière homogène, linéaire ou sensiblement linéaire ayant une masse volumique de 0,865 à 0,905 gramme par centimètre cube et un indice de fluidité à chaud (mesuré à 190 °C sous 2,16 kilogrammes) de 0,5 à 30 grammes par 10 minutes ; dans laquelle le composant A est présent en une quantité allant de 60 à 95 % en poids ;
dans laquelle le polymère de base a une température de fusion inférieure à 100 °C ;
dans laquelle le copolymère d'éthylène/α-oléfine ramifié de manière homogène présente un seul pic de fusion, tel que mesuré par calorimétrie différentielle à balayage (DSC) ;
et
(2) Composant B, dans lequel le Composant B représente de 10 % à 40 %, par rapport au poids de la formulation dans son ensemble, d'au moins un composant secondaire qui est
(b) éthylène-acrylate d'éthyle ayant une teneur en acrylate d'éthyle allant de 5 à 25 % en poids, par rapport au poids de l'éthylène-acrylate d'éthyle.

2. Amélioration d'un procédé de formation d'un article à base de polyoléfine qui comporte (a) l'incorporation dans une formulation de polyoléfine d'un composant qui est capable d'être excité par un champ électromagnétique à haute fréquence ; (b) la formation d'un substrat à partir de la formulation de polyoléfine, le substrat ayant au moins une surface ; et (c) la soumission de la surface du substrat en polyoléfine au champ électromagnétique à haute fréquence dans des conditions telles que le substrat soit soudé à une seconde surface du substrat en polyoléfine ou à une surface d'un second substrat en polyoléfine pour former un article à base de polyoléfine ;
dans laquelle l'amélioration comprend
(1) l'utilisation comme polymère de base dans la formulation de polyoléfine d'une polyoléfine qui est
(a) un copolymère d'éthylène/α-oléfine ramifié de manière homogène, linéaire ou sensiblement linéaire ayant une masse volumique de 0,865 à 0,905 gramme par centimètre cube et un indice de fluidité à chaud (mesuré à 190 °C sous 2,16 kilogrammes) de 0,5 à 30 grammes par 10 minutes ; dans lequel le composant A est au moins l'un du polymère de base, dans lequel le composant A est en une concentration de 60 à 95 % en poids ; dans lequel le copolymère d'éthylène/α-oléfine ramifié de manière homogène présente un pic de fusion unique, tel que mesuré par calorimétrie différentielle à balayage (DSC) à condition que le polymère de base ait une température de fusion inférieure à 100 °C ; et
(2) comportant, en tant que composant secondaire dans la formulation de polyoléfine, de 10 % à 40 %, par rapport au poids de la formulation de polyoléfine, d'au moins un polymère qui est
(b) un copolymère d'éthylène-acrylate d'éthyle ayant une teneur en acrylate d'éthyle de 5 % à 25 % en poids, par rapport au poids du copolymère d'éthylène-acrylate d'éthyle, dans lequel le composant secondaire est le composant B ;
de telle sorte que le substrat en polyoléfine présente comme propriétés une rupture de soudure cohésive, et une résistance de soudure pour un substrat de 10 mil (0,254 millimètre) d'épaisseur qui est supérieure à 7 livres par pouce (1,23 Newton par millimètre) dans des conditions de soudage comprenant un temps de soudage inférieur ou égal à 6 secondes.

3. Article en polyoléfine soudé à haute fréquence selon la revendication 1 choisi dans le groupe constitué de dispositifs médicaux choisis parmi les brassards de pression et les dispositifs de stabilisation ; d'articles gonflables choisis parmi les jouets, les embarcations, le rembourrage et les meubles ; de feuilles choisies parmi les auvents, les bannières, les enseignes, les tentes, les bâches et les revêtements pour piscines, bassins ou décharges ; de reliures de livres ; et de dispositifs de transport choisis parmi les sacs de sport et les sacs à dos.

4. Formulation de polyoléfine soudable diélectriquement selon la revendication 1 ou 3, ou amélioration d'un procédé selon la revendication 2, dans laquelle le copolymère d'éthylène/α-oléfine ramifié de manière homogène, linéaire ou sensiblement linéaire a une masse volumique de 0,865 à 0,900 gramme par centimètre cube.
